# EUROPEAN PATENT APPLICATION

(11) **EP 3 632 217 A1**
(43) Date of publication of application: **08.04.2020**
(21) Application number: 18198274.5
(22) Date of filing: 02.10.2018
(51) Int. Cl.: A23L 3/3409, B65D 81/20, B65D 81/26, A23L 3/3418, A23B 4/16

(54) **MODIFIED ATMOSPHERE FOOD PACKAGING TRAY**

(71) Applicant: Dampack International BV, 4251 NZ Werkendam (NL)
(72) Inventor: Rutten, Ludo, 3910 Neerpelt (BE); VANDENDRIESCHE, Luc, 8553 Otegem (BE); DAMEN, Rory, 4255 SG Nieuwendijk (NL)
(74) Representative: Office Kirkpatrick

(57) **Abstract**

The invention relates to the field of food packaging, in particular for food packaged under modified atmosphere. A food packaging tray, for watery fluid exuding food, comprises a perforated sheet material arranged above the bottom of the tray for supporting the food and defining, between said sheet and the bottom of the tray, a liquid chamber, the tray being characterized in that the perforated sheet material comprises a water reactive agent for releasing gas suitable to enhance the shelf life of the food, said agent being underneath the perforated sheet material.

## Description

The invention relates to the field of food packaging, in particular for food packaged under modified atmosphere.

### Background of the invention

Retail sale of perishable food products requires that certain sanitary standards are met regarding microbiological contamination. Products like fish, meat or poultry have relatively short shelf-life and necessitate to be handled rapidly at every step of the commercialization chain, from production to the end user.

To ensure sufficient shelf-life, such products need to be maintained at a temperature around 4 °C. To increase the shelf life, these products are often placed under a modified atmosphere in a packaging tray where:
- oxygen (O₂) levels are reduced in order to slow down the growth of aerobic microorganisms as well as slow down pigment oxidation leading to color changes on the food, and
- carbon dioxide (CO₂) levels are increased to delay microorganisms growth.

However, with time, the food product as well as the liquid exuded by the food product tend to absorb some of the CO₂, thereby disrupting the original O₂/CO₂ ratio in the package which leads to the reduction of the antimicrobial activity.

To overcome this problem, it has been proposed to provide a CO2 releasing agent in a pocket within the packaging. The humidity or moisture exuded from the food product reacts with the active agent, like for example sodium bicarbonate, to trigger the release of gaseous CO2, ensuring a constant high CO2 level in the package over time and thereby delaying the growth of the microorganisms. However, there have been many cases where the food came directly into contact with the pocket, or where the user took the pocket as a comestible part in the package. This option is therefore not safe.

Other documents, like WO2009/111768, disclose gas releasing active agents, like sodium bicarbonate, inserted between the layers of an absorbent pad usually placed just below the food product in the packaging. Absorption of exuded liquid from the food by the absorbent pad leads to the liquid contacting the active agent and reacting with it to release gas, like CO₂. The more liquid is exuded, the more CO₂ is released, up to the total consumption of bicarbonate. However, absorbent pads present many drawbacks. For example, recycling packages containing an absorbent pad is complex, as the absorbent pad may not be allowed in the same rubbish container as the rest of the package for recycling. Moreover, some people are reluctant to touch absorbent pads or to consume food which has been in contact with such pads, which they find disgusting. These pads are also often saturated by liquid exuded from food and their efficiency is limited.

The applicant has previously disclosed, in WO2016/050736, a food packaging tray devoid of any absorbent pad or any other solid material. Said food packaging comprises a perforated sheet material supporting the food and partitioning the package into two chambers, a food chamber and a liquid chamber, the liquid chamber being empty of gas releasing material.

The object of the invention is to improve the tray of WO2016/050736 in order to maintain, during its use, a modified atmosphere within the package, in order to improve the shelf life of a food product contained therein.

### Solution of the invention

To this end, the invention relates to a food packaging tray, for watery fluid exuding food, comprising a perforated sheet material arranged above the bottom of the tray for supporting the food and defining, between said sheet and the bottom of the tray, a liquid chamber, the tray being characterized in that the perforated sheet material comprises a water reactive agent for releasing gas suitable to enhance the shelf life of the food, said agent being underneath the perforated sheet material.

Preferably, the gas releasing agent is printed or coated onto the perforated sheet material, on its side facing the bottom of the tray. This ensures that the agent does not come in contact with the food when a food product is inserted in the tray.

The invention also relates to a food packaging tray, for watery fluid exuding food, comprising a perforated sheet material arranged above the bottom of the tray for supporting the food and defining, between said sheet and the bottom of the tray, a liquid chamber, the tray being characterized in that the perforated sheet material comprises a water reactive agent for releasing gas suitable to enhance the shelf life of the food, said agent being incorporated in the perforated sheet material.

The agent can be incorporated inside the perforated sheet material, for example, by extrusion.

The agent refers here to a gas releasing chemical agent.

The liquid chamber is a chamber for collecting the watery fluid exuded from the food in order to keep this fluid out of contact of the food.

The tray is thus devoid of any extraneous non edible solid material, like for example a sachet containing a powder of gas releasing active agent, to ensure that there will not be any misuse of such extraneous material, or an absorbent pad, to facilitate recycling of the tray. It may still contain edible material other than the main piece of food, like a sachet of spices for example, which is considered as edible solid material in the sense of the invention.

The tray is a sealable tray, otherwise similar in its design to the tray of WO2016/050736. However, while the tray of WO2016/050736 made a point of having a liquid chamber empty of gas releasing material, the tray of the present invention goes against this teaching by, on the contrary, purposely adding, in the liquid chamber, on the surface of the partitioning perforated sheet material, a gas releasing agent. A person wanting to get rid of the bicarbonate containing absorbent pad while maintaining a modified atmosphere in the tray would not would not have found in WO2016/050736 any incitation to make the present invention.

The invention will be better understood with the following description of several examples, referring to the accompanying drawing on which:
figure 1 is a perspective top view of the tray of the invention;
figure 2 is a simplified cross sectional view of the tray of figure 1 and
figure 3 is a bottom view of the sheet material of figures 1 and 2.

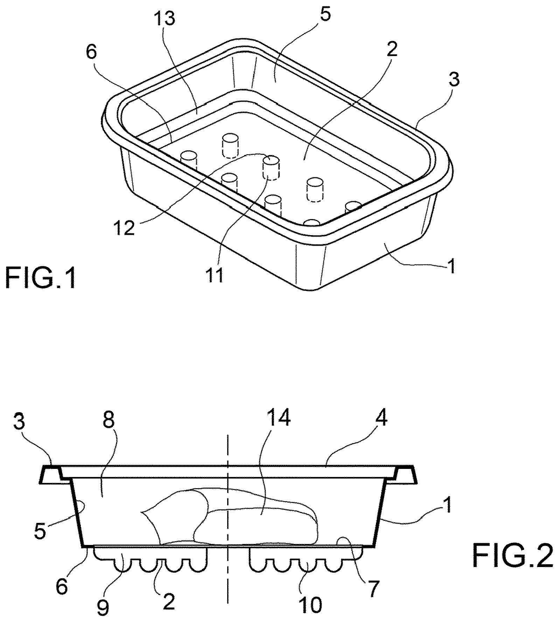

Referring to figures 1, 2 and 3, the packaging tray of the instant case has a generally parallelepipedic shape with an outer side wall 1, and a bottom 2. In a plane generally parallel to the bottom 2, the side wall 1 is extended by a rather thin top border 3, except that the four corners where it is slightly larger.

The inner surface 5 of the sidewall 1 is provided with a shelf 6 for supporting a perforated sheet material 7, here a film for supporting the food, dividing the tray into a food chamber 8 and a liquid chamber 9 (figure 2).

The height of the partitioning film 7 above the bottom 2 is small, compared to the height of tray.

The tray of figure 2 contains a food product, here a piece of meat 14 and is closed with a closing sheet 4 sealed to the top border 3.

The liquid chamber 9 is empty of absorbent material.

The bottom 2 of the tray has here a capillary structure 10, which can be a honeycomb structure.

Pillars 11 are here provided on the bottom 2, having a height such that their top ends 12 lie here in the same plane as the top annular surface 13 of the shelf 6 forming a shoulder supporting the partition 7. The perforated sheet material 7 is fastened on its border to the shoulder 6, for example using glue, or by thermos-bonding. The pillars 11 are optional or can result from a particular design of the bottom of the tray, depending on the size of the tray and the weight of the food intended to be placed in said tray.

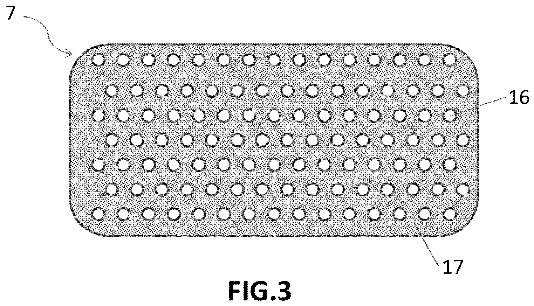

Referring to figure 3, the sheet material 7 is here a permeable film, preferably moisture and gas permeable film. Numerous small perforations 16 are homogeneously spread over the surface of the film. The surface of the film intended to face the bottom of the tray is coated with sodium bicarbonate 17 over it whole surface.

The tray as described above will be used as follows.

During manufacture of the tray, the permeable sheet material 7 is secured onto the annular shoulder 13 of the shelf 6, for example using glue or using heat and taking advantage of melting properties of the materials constituting the tray.

A food product 14 - here a piece of meat - is put on the film 7, the air is taken out of the tray and a modified atmosphere is injected therein prior to closing the tray on top of the food chamber 8 by the plastic sheet 4 secured onto the top boarder 3. The modified atmosphere is for example a mixture of around 70% of O2 and 30% CO2.

Thanks to the perforations of the film 7, the modified atmosphere may diffuse in both chambers 8, 9 and circulate around the piece of meat 14. The fluid chamber 9 being empty of extraneous solid material such as an absorbent pad, the modified atmosphere is not polluted by gases which could come out of such a pad.

The film 7 covering the full section between the chambers 8 and 9, the fluid (blood, water) exuded by the piece of meat can only flow through the perforations 16 of the film 7. The flow is very slow and after passing through a perforation 16, the fluid comes into contact with the bicarbonate 17 spread on the lower surface of the film 7, due to surface tension. Upon contact with water, the bicarbonate will react according to the well-known reaction:

H2O + NaHCO3 -> CO2 + H2O + NaOH

thereby releasing CO2 in the tray. This reaction enables to maintain a high level of CO2 in the sealed tray in order to ensure the antimicrobial effect and extend the shelf life of the product by at least a few days.

It is well known that with time, some of the gas originally present in a food tray is absorbed by the food, thereby lowering the pressure in the tray. Most trays are designed in materials sufficiently flexible to accommodate changes in pressure over time. The release of CO2 is therefore not associated with a risk of the tray collapsing or exploding. The amount of bicarbonate comprised on the material sheet is of course adjusted to the overall volume of the tray.

The reaction of the bicarbonate with water also generates sodium hydroxide, which could impact the pH in the tray. To compensate for hydroxide generation, acidic substances such as for example citric acid may be coated along with the bicarbonate. The hydroxide ions would thereby be quenched directly upon their generation in the surface of the film.

In the above example, the sheet material 7 is a film coated with sodium bicarbonate as a gas releasing agent. The coating may comprise other components or a combination of components, to obtain combined effects. For example, any other gas releasing agent may be used, depending on the type of food to be placed in the tray, like for example, but not limited to, any other suitable salt of bicarbonate like lithium, potassium, calcium or ammonium bicarbonate. Some gas trapping substance could also be used on the film, for example acetylene trapping substance to prevent over-maturation of some fruits. Antibacterial may also be placed on the sheet material to further extend the shelf-life of the product.

In the above example, gas releasing agent is coated on the sheet material 7, which is a film. Coating may be performed by any known technique, like for example by wet spraying and drying, powder scattering or printing. The technique is adapted to the nature of the sheet material.

The sheet material 7 can be a polymeric film, or any other material like, for example, a nonwoven material, suitable for food contact.

Instead of being coated, the gas releasing agent can also be incorporated in the sheet material 7. It could for example be incorporated during the preparation of the film, before the extrusion step. In the case of a nonwoven, it could be incorporated in the voids between the fibers.

It is not necessary that the whole surface of the film be treated with the gas releasing agent. It may be sufficient that a portion of it, corresponding for example to the area where the food product is expected to take place, is covered with the gas releasing agent.

In the instant case, the perforations 16 of the film 7 are designed for liquid circulation. Some of the perforations could be micro-perforations used for gas circulation only and too small for liquid circulation. In any case, the film 7 should be designed for the modified atmosphere to be able to more or less envelop the piece of food 14 and be in contact with the underside of the food product, at least in part, while the gas releasing agent is kept away from the food product.

The tray is intended to be stored horizontally, so that the exuded liquid remains in the liquid chamber, i.e. the bottom section of the tray.

The packaging tray of the invention may have any shape suitable for the intended use, and is not limited to the parallelepipedic shape illustrated.

The tray of the invention is therefore environment friendly, as it enables easy recycling and makes use of less resources, like absorbent pads. It also enables to increase the shelf-life of the food product contained therein by ensuring the stability of the modified atmosphere for a longer time, without that the food product be in contact with chemical agents of exuded fluids.

## Claims

1. A food packaging tray, for watery fluid exuding food, comprising a perforated sheet material (7) arranged above the bottom (2) of the tray for supporting the food and defining, between said sheet and the bottom of the tray, a liquid chamber (9), the tray being **characterized in that** the perforated sheet material comprises a water reactive agent (17) for releasing gas suitable to enhance the shelf life of the food, said agent being underneath the perforated sheet material (7).

2. Food packaging tray according to claim 1, in which the gas releasing agent (17) is printed or coated onto the side of the perforated sheet material facing the bottom (2) of the tray.

3. A food packaging tray, for watery fluid exuding food, comprising a perforated sheet material (7) arranged above the bottom (2) of the tray for supporting the food and defining, between said sheet (7) and the bottom (2) of the tray, a liquid chamber (9), the tray being **characterized in that** the perforated sheet material comprises a water reactive agent (17) for releasing gas suitable to enhance the shelf life of the food, said agent being incorporated in the perforated sheet material (7).

4. Food packaging tray according to one of claims 1 to 3, wherein the liquid chamber (9) is devoid of any extraneous non edible solid material.

5. Food packaging tray according to one of claims 1 to 3, wherein the tray is devoid of any extraneous non edible solid material.

6. Food packaging tray according to one of claims 1 to 5, wherein the gas releasing agent (17) is a salt of bicarbonate.
